# FASCICULE DE BREVET EUROPEEN

(11) **EP 3 135 554 B1**
(45) Date de publication et mention de la délivrance du brevet: **20.06.2018**
(21) Numéro de dépôt: 16306080.9
(22) Date de dépôt: 25.08.2016
(51) Int. Cl.: B61L 5/06, B61L 23/00, B61B 13/04, B60M 1/32, E01B 7/00, E01B 7/08

(54) **DISPOSITIF DE CHANGEMENT DE TRAJECTOIRE AVEC ALIMENTATION PAR "TROISIÈME RAIL"**
VORRICHTUNG ZUM ÄNDERN DER BEWEGUNGSBAHN MIT STROMVERSORGUNG ÜBER DRITTE SCHIENE
TRAJECTORY-CHANGING DEVICE WITH POWER SUPPLY BY THIRD RAIL

(30) Priorité: 27.08.2015 FR 1557975
(43) Date de publication de la demande: 01.03.2017
(73) Titulaire: Vossloh Cogifer (Société Anonyme), 92500 Rueil Malmaison (FR)
(72) Inventeur: BARRESI, Francesco, 67000 Strasbourg (FR); CHARPENTIER, Vincent, 57230 Baerenthal (FR)
(74) Mandataire: Nuss, Laurent

(56) Documents cités:
- WO-A1-00/27681
- WO-A1-95/35221
- DE-A1- 19 935 783
- FR-A1- 2 521 499
- FR-A1- 2 878 488
- US-A- 4 970 962

## Description

La présente invention se rapporte au domaine des systèmes ferroviaires monorail et plus particulièrement au domaine des mécanismes de captage de courant au niveau des dispositifs de changement de trajectoire pour véhicule en déplacement sur un tel système.

Actuellement, les mécanismes de captage de courant dans l'électrification des réseaux ferroviaire font intervenir des fils de contact aérien, des rails électriques ou alternativement une combinaison de ces deux approches.

Une particularité de la mise en oeuvre de cette alimentation par rails électriques consiste à apporter l'énergie électrique par l'intermédiaire d'un système appelé « troisième rail ». Ce troisième rail consiste en un rail supplémentaire d'alimentation disposé entre les rails de roulement ou à l'extérieur de ces rails de roulement. Dans le cadre d'un système ferroviaire monorail, le système « troisième rail » consiste en un second rail positionné latéralement et à distance du rail de roulement, par exemple à l'extérieur du chemin de roulement des pneumatiques des véhicules en déplacement le long du monorail.

Au niveau d'un dispositif de changement de trajectoire d'un système ferroviaire monorail, le système « troisième rail » est arrangé pour suivre chacune des voies de bifurcation du réseau ferroviaire. Selon une construction actuelle classique, le dispositif de changement de trajectoire monorail fait intervenir un plateau mobile portant une paire de tronçons de rail destinés à être disposés entre, d'une part, un rail d'entrée et, d'autre part, un rail de sortie sélectionné alternativement parmi deux. Le déplacement du plateau mobile se trouve alors opéré par pivotement dans un plan sensiblement horizontal.

Un tel dispositif de changement de trajectoire est connu par exemple de FR 2 878 488.

Pour optimiser la construction d'un dispositif de changement de trajectoire monorail conjointement à une alimentation par un système « troisième rail », la présente invention propose un dispositif réduisant le nombre d'éléments à installer pour mettre en oeuvre un dispositif de changement de trajectoire intégrant un système « troisième rail ».

A cet effet, l'invention a pour objet un dispositif de changement de trajectoire pour véhicules sur roues guidés par l'intermédiaire d'un rail unique, coopérant avec des mécanismes à galet fixés au véhicule, depuis une partie avant vers une partie arrière, et destiné à être positionné entre un rail d'entrée et deux rails de sortie, caractérisé en ce que le dispositif comprend:
- un plateau mobile portant deux tronçons de rails disposés de façon sensiblement parallèle au niveau d'au moins une portion,
- un pivot vertical monté au niveau d'une portion arrière du plateau mobile,
- un moyen d'actionnement du pivotement du plateau mobile,
- au moins une structure fixe de butée latérale du plateau mobile, disposée de niveau avec le plateau mobile et orientée le long d'un côté du plateau mobile selon un axe sensiblement similaire à l'axe d'au moins un des tronçons de rail du plateau mobile, cette structure de butée supportant, directement ou indirectement, au niveau de sa partie supérieure et/ou latérale, au moins un tronçon de rail d'alimentation électrique de type « troisième rail ».

L'invention sera mieux comprise, grâce à la description ci-après, qui se rapporte à au moins un mode de réalisation préféré, donné à titre d'exemple non limitatif, et expliqué avec référence aux dessins schématiques annexés, dans lesquels :

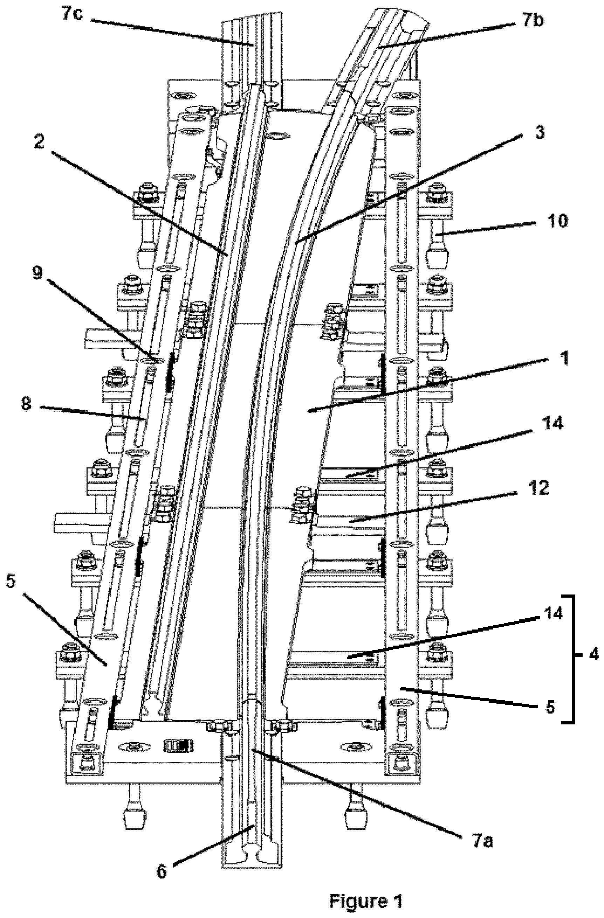

- la figure 1 est une représentation schématique d'un exemple de réalisation du dispositif de changement de trajectoire de l'invention,

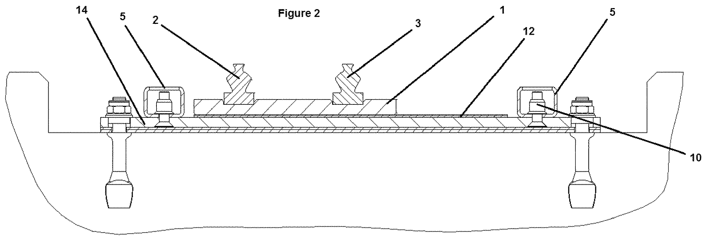

- la figure 2 est une représentation schématique d'un exemple de réalisation du dispositif de changement de trajectoire de l'invention selon un plan perpendiculaire à l'axe de déplacement d'un véhicule,

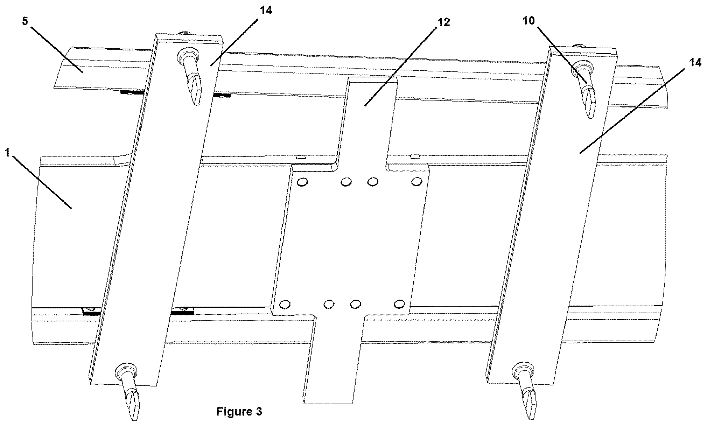

- la figure 3 est une représentation schématique d'un détail du plateau mobile du dispositif de l'invention selon une vue inférieure,

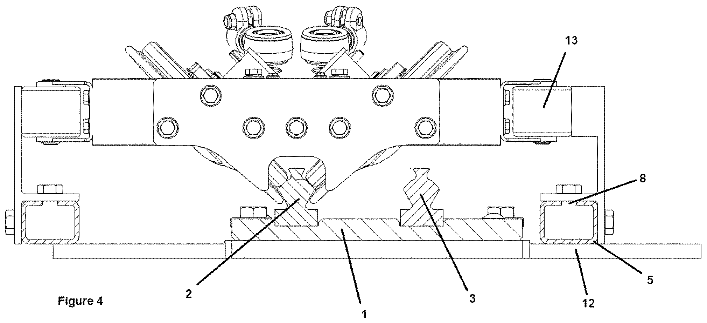

- la figure 4 est une représentation schématique d'un exemple de réalisation du dispositif de changement de trajectoire de l'invention intégrant une paire de tronçons de rail d'alimentation électrique de type « troisième rail » en interaction avec un véhicule, selon un plan perpendiculaire à l'axe de déplacement d'un véhicule.

Dans le présent document, il convient de comprendre l'expression rédigée entre guillemet « troisième rail » comme se rapportant au système d'alimentation électrique ferroviaire faisant intervenir la technologie communément dénommée « troisième rail ». Le terme « troisième rail » ne définit pas le rail par rapport à deux autres rails du dispositif qui pourrait être précédemment évoqués.

L'invention se rapporte à un dispositif de changement de trajectoire pour véhicules sur roues guidés par l'intermédiaire d'un rail (6) unique, coopérant avec des mécanismes à galet fixés au véhicule, depuis une partie avant vers une partie arrière, et destiné à être positionné entre un rail d'entrée (7a) et deux rails de sortie (7b, 7c), caractérisé en ce que le dispositif comprend:
- un plateau (1) mobile portant deux tronçons de rail (2, 3) disposés de façon sensiblement parallèles au niveau d'au moins une portion,
- un pivot vertical monté au niveau d'une portion arrière du plateau (1) mobile,
- un moyen d'actionnement du pivotement du plateau (1) mobile,
- au moins une structure (5) fixe de butée latérale du plateau mobile, disposée de niveau avec le plateau mobile (1) et orientée le long d'un côté du plateau (1) mobile selon un axe sensiblement similaire à l'axe d'au moins un des tronçons de rail (2, 3) du plateau mobile (1), cette structure (5) de butée supportant, directement ou indirectement, au niveau de sa partie supérieure et/ou latérale, au moins un tronçon de rail d'alimentation électrique de type « troisième rail » (13).

Cette intégration de la fonction de support du « troisième rail » (13) à la structure (5) de butée du dispositif de changement de trajectoire permet de s'affranchir de la nécessité de construire une structure supplémentaire spécifiquement dédiée à cette fonction de support. La structure (5) de butée du dispositif de changement de trajectoire étant disposée à l'extérieur du plateau mobile (1) et des tronçons monorail qu'il porte, cette structure (5) de butée est donc adaptée au positionnement transversal du « troisième rail » pour une alimentation électrique le long de la portion du trajet formée par le dispositif de changement de trajectoire.

Selon une construction particulière du dispositif de l'invention, l'arrangement de la structure (5) de butée latérale est opérée de sorte qu'elle réalise une butée de fin de course du plateau mobile (1) au niveau d'un ou de plusieurs points répartis le long de l'ensemble de sa longueur. La structure (5) de butée latérale est alors préférentiellement disposée selon un axe sensiblement parallèle, voire identique, à l'axe du bord latéral du plateau mobile (1) lorsque le plateau mobile (1) est en fin de course et en contact contre la structure (5) de butée. Le contact entre la structure (5) et le bord latéral du plateau mobile (1) peut alors être effectuée au niveau d'au moins une portion de la longueur de la structure (5) de butée. Alternativement, ce contact peut être réalisé au niveau d'une portion de contact discontinue répartie sur la longueur de la structure (5) de butée.

Selon une particularité de construction préféré de l'invention, la structure (5) de butée est intégrée dans une structure d'encadrement (4) du plateau (1) mobile et à l'intérieur de laquelle le plateau (1) mobile est susceptible d'opérer un pivotement. Selon un exemple de construction, cette structure d'encadrement (4) se trouve ainsi formée par au moins une structure (5) de butée fixée par sa face inférieure à un ou plusieurs éléments de connexion (14) disposés transversalement et susceptibles d'être montés sur des traverses respectives. La structure fixe (4) présente alors un arrangement préférentiellement sensiblement plan.

Selon un mode de construction préféré du dispositif de l'invention, la structure d'encadrement (4) comprend deux structures (5) de butée disposées dans la longueur du dispositif, de part et d'autre du plateau (1) mobile. Dans la structure d'encadrement (4), ces structures (5) de butée sont reliées entre elles par des éléments de connexion (14) disposés transversalement au niveau des extrémités des structures (5) de butée. Selon un exemple de cette construction, la structure d'encadrement (4) est formée par une paire de structures (5) de butée disposées de façon sensiblement parallèles entre elles et fixées par leurs faces inférieures respectives sur un ou plusieurs éléments de connexion (14) disposés transversalement et susceptibles d'être montés sur des traverses respectives. Par ailleurs, selon une variante de construction du dispositif de l'invention, la structure d'encadrement (4) est associée à tout ou partie d'un boîtier ou caisson dans lequel est logé au moins une partie du mécanisme d'actionnement du pivotement du plateau (1) mobile.

Selon une particularité de ce mode de construction, la structure d'encadrement (4) présente la forme d'un trapèze comportant, d'une part, deux éléments sensiblement parallèles au niveau desquelles sont fixés le rail d'entrée (7a) et les deux rails de sortie (7b, 7c) et, d'autre part, deux structures (5) de butée disposées dans la longueur du dispositif. Ainsi, les structures (5) de butée positionnées de part et d'autre du plateau mobile (1) ne sont pas disposées de façon parallèle entre elles. Les structures (5) de butée sont écartées au niveau de leurs extrémités situées du côté du rail d'entrée (7a) et rapprochées au niveau de leurs extrémités situées du côté des rails de sortie (7b, 7c).

Selon une autre particularité de construction, le dispositif comprend une structure (5) de butée en regard de chaque face latérale du plateau (1) mobile, de façon à réaliser une fin de course lors du pivotement du plateau mobile (1) dans chaque sens de rotation. Aussi, le système « troisième rail » peut être intégré de chaque côté du dispositif de changement de trajectoire.

Selon une autre particularité de construction préférée, l'axe vertical de pivotement du plateau mobile (1) est positionné plus proche du côté des rails de sortie (7b, 7c) que côté du rail d'entrée (7a).

Selon un autre mode de réalisation, éventuellement complémentaire, du dispositif de l'invention, le plateau (1) mobile est associé avec au moins une pièce de stabilisation (12) montée fixe en déplacement avec le plateau (1) mobile et comportant au moins une portion faisant saillie au niveau d'un des côtés du plateau (1) mobile et adaptée pour se positionner sous la surface inférieure d'une structure (5) de butée. La pièce de stabilisation (12) peut être réalisée par une lame qui, fixée contre la face inférieure du plateau (1) mobile, dépasse du bord latéral du plateau (1) mobile. Lors du déplacement du plateau (1) mobile, la lame de la pièce de stabilisation (12) est entraînée pour glisser sous, voire contre, la face inférieure de la structure (5) de butée. Ainsi, lors du déplacement du plateau (1) mobile en pivotement, les pièces de stabilisation (12) assurent le maintien du plateau (1) mobile en position de niveau avec la structure (5) de butée avec laquelle la pièce de stabilisation (12) coopère. Alternativement, la lame de la pièce de stabilisation (12) est entraînée pour s'insérer au niveau de son extrémité dans un orifice dédié et/ou adapté d'une face latérale de la structure (5) de butée de sorte que l'interaction de la lame de la pièce de stabilisation (12) dans cet orifice est similaire à celle d'un loquet pour limiter, voire empêcher, tout déplacement vertical de la pièce de stabilisation (12) et du plateau (1) mobile.

Dans le cadre d'une construction faisant intervenir une paire de structures (5) de butée, chaque structure (5) de butée est adaptée pour être susceptible d'interagir avec une ou plusieurs pièces de stabilisation (12).

Selon une particularité de construction du dispositif de changement de trajectoire de l'invention, au moins une structure (5) de butée qui porte un tronçon de rail d'alimentation électrique de type « troisième rail » (13), présente une structure creuse de forme tubulaire.

Cette structure (5) de butée qui porte un tronçon de « troisième rail », permet de profiter des avantages d'une structure de section pleine, qui remplit la fonction de butée, en y associant les avantages d'une structure de section creuse, qui autorise le logement de tout ou partie d'un câblage ou dispositif chauffant à l'intérieur de sa structure (5). Un tel arrangement permet ainsi de profiter de la partie creuse de la structure (5) de butée pour opérer une connexion entre deux points d'un réseau électrique ou de chauffage situés de part et d'autre du dispositif de changement de trajectoire de l'invention.

Selon une particularité de réalisation du dispositif de l'invention, au moins une structure (5) de butée comporte une rainure (8) au niveau d'une portion de sa surface supérieure ou latérale. Cette rainure (8) permet, dans le cas d'une structure (5) de butée creuse, d'accéder directement à l'intérieur de la structure (5) de butée pour permettre, d'une part, une fixation du support du troisième rail et, d'autre part, un réglage de la position du troisième rail sur la structure (5) de butée. Toutefois, selon une construction préférée mais non-limitative de cette particularité de réalisation, la rainure (8) est réalisée de façon discontinue le long de la structure (5) de butée. Cet arrangement permet également, dans le cas d'une structure (5) de butée creuse, de former, au niveau de la surface supérieure de la structure (5) de butée, des ponts de connexion entre les deux parois latérales de la structure (5) de butée, de façon à conserver un transfert de force entre les parois latérales lors des impacts du plateau mobile (1) en fin de course de pivotement. Ce transfert de force optimise la résistance de la structure (5) de butée face aux impacts du plateau mobile (1). Selon une particularité de construction, les portions de rainure (8) discontinue sont disposées au niveau de points de fixation particuliers du « troisième rail » sur la structure (5) de butée.

Selon une autre particularité de réalisation de l'invention, au moins une structure (5) de butée présente au moins un orifice (9) adapté pour être traversé par un moyen de fixation (10) permettant un ancrage de la structure (5) de butée, voire de la structure d'encadrement (4), du dispositif directement ou indirectement au sol. Selon une complémentarité des particularités relatives à la structure (5) de butée et à la rainure (8), l'orifice (9) destiné à la fixation de la structure (5) de butée est disposé au niveau de la face inférieure de la structure (5) de butée, de sorte que l'opération de fixation puisse être opérée directement en intervenant au niveau de l'ouverture réalisée par une rainure (8) dans la paroi supérieure et un orifice (9) de fixation.

Selon une particularité de construction, le dispositif de changement de trajectoire de l'invention est caractérisé en ce que la structure (5) de butée présente au niveau d'au moins une section une forme sensiblement rectangulaire.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de changement de trajectoire pour véhicules sur roues guidés par l'intermédiaire d'un rail (6) unique, coopérant avec des mécanismes à galet fixés au véhicule, depuis une partie avant vers une partie arrière, et destiné à être positionné entre un rail d'entrée (7a) et deux rails de sortie (7b, 7c), et comprenant:
- un plateau (1) mobile portant deux tronçons de rail (2, 3) disposés de façon sensiblement parallèles au niveau d'au moins une portion,
- un pivot vertical monté au niveau d'une portion arrière du plateau (1) mobile,
- un moyen d'actionnement du pivotement du plateau (1) mobile,
- au moins une structure (5) fixe de butée latérale du plateau mobile, disposée de niveau avec le plateau mobile (1) et orientée le long d'un côté du plateau (1) mobile selon un axe sensiblement similaire à l'axe d'au moins un des tronçons de rail (2, 3) du plateau mobile (1),
**caractérisé en ce que**
cette structure (5) de butée supporte directement ou indirectement, au niveau de sa partie supérieure et/ou latérale, au moins un tronçon de rail d'alimentation électrique de type « troisième rail » (13).

2. Dispositif de changement de trajectoire selon la revendication 1, **caractérisé en ce que** la structure (5) de butée latérale réalise une butée de fin de course du plateau mobile (1) au niveau d'un ou de plusieurs points répartis le long de l'ensemble de sa longueur.

3. Dispositif de changement de trajectoire selon une des revendications précédentes, **caractérisé en ce que** le plateau (1) mobile est associé avec au moins une pièce de stabilisation (12) montée fixe en déplacement avec le plateau (1) mobile et comportant au moins une portion faisant saillie au niveau d'un des côtés du plateau (1) mobile et adaptée pour se positionner sous la surface inférieure d'une structure (5) de butée.

4. Dispositif de changement de trajectoire selon une des revendications précédentes, **caractérisé en ce que** le dispositif comprend une structure d'encadrement (4) du plateau (1) mobile qui présente la forme d'un trapèze comportant, d'une part, deux éléments sensiblement parallèles au niveau desquelles sont fixés le rail d'entrée (7a) et les deux rails de sortie (7b, 7c) et, d'autre part, deux structures (5) de butée disposées dans la longueur du dispositif.

5. Dispositif de changement de trajectoire selon une des revendications précédentes, **caractérisé en ce qu'**au moins une structure (5) de butée qui porte un tronçon de rail d'alimentation électrique de type « troisième rail » (13), présente une structure creuse de forme tubulaire.

6. Dispositif de changement de trajectoire selon une des revendications précédentes, **caractérisé en ce qu'**au moins une structure (5) de butée comporte une rainure (8) au niveau d'une portion de sa surface supérieure ou latérale.

7. Dispositif de changement de trajectoire selon une des revendications précédentes, **caractérisé en ce que** au moins une structure (5) de butée présente au moins un orifice (9) adapté pour être traversé par un moyen de fixation (10) permettant un ancrage de la structure fixe (4) du dispositif directement ou indirectement au sol.

8. Dispositif de changement de trajectoire selon une des revendications précédentes, **caractérisé en ce que** la structure (5) de butée présente au niveau d'au moins une section une forme sensiblement rectangulaire.

9. Dispositif de changement de trajectoire selon une des revendications précédentes, **caractérisé en ce que** la structure tubulaire (5) est adaptée à loger tout ou partie d'un câblage ou dispositif chauffant.

## Patentansprüche

1. Vorrichtung zur Laufbahn- bzw. Bewegungsbahnänderung für Fahrzeuge auf Rädern, die mittels einer einzelnen Schiene (6) geführt werden, welche von einem vorderen Teil zu einem hinteren Teil mit an dem Fahrzeug befestigten Führungsrollenmechanismen zusammenwirkt, und dazu bestimmt ist, zwischen einer Eingangsschiene (7a) und zwei Ausgangsschienen (7b, 7c) angeordnet zu werden, und umfassend:
- eine bewegliche Platte (1), die zwei Schienenstücke (2, 3) trägt, die im Bereich mindestens eines Abschnitts im Wesentlichen parallel angeordnet sind,
- einen vertikalen Drehpunkt, der im Bereich eines hinteren Abschnitts der beweglichen Platte (1) montiert ist,
- ein Betätigungsmittel zum Schwenken der beweglichen Platte (1),
- mindestens eine feststehende Anschlagstruktur (5) seitlich der beweglichen Platte, die auf gleichem Niveau mit der beweglichen Platte (1) angeordnet ist und entlang einer Seite der beweglichen Platte (1) entlang einer Achse orientiert ist, die im Wesentlichen ähnlich zu der Achse mindestens einer der Schienenstücke (2, 3) der beweglichen Platte (1) ist, **dadurch gekennzeichnet, dass**
diese Anschlagstruktur (5) direkt oder indirekt im Bereich ihrer oberen und/oder seitlichen Bereiche mindestens ein Schienenstück zur elektrischen Versorgung des Typs "dritte Schiene" (13) trägt.

2. Vorrichtung zur Bewegungsbahnänderung nach Anspruch 1, **dadurch gekennzeichnet, dass** die seitliche Anschlagstruktur (5) einen Endanschlag für die bewegliche Platte (1) im Bereich eines oder mehrerer entlang der ganzen Länge verteilter Punkte realisiert.

3. Vorrichtung zur Bewegungsbahnänderung nach einem der vorhergehenden Ansprüche, **dadurch gekennzeichnet, dass** der beweglichen Platte (1) mindestens ein Stabilisierungsstück (12) zugordnet ist, das fest in der Bewegung mit der beweglichen Platte (1) verbunden ist und mindestens einen Abschnitt aufweist, der im Bereich einer der Seiten der beweglichen Platte (1) hervorsteht und dazu eingerichtet ist, um sich unter die Unterseite einer Anschlagstruktur (5) zu positionieren.

4. Vorrichtung zu Bewegungsbahnänderung nach einem der vorhergehenden Ansprüche **dadurch gekennzeichnet, dass** die Vorrichtung eine Rahmenstruktur (4) für die bewegliche Platte (1) aufweist, welche die Form eines Trapezes zeigt, das einerseits zwei im Wesentlichen parallele Elemente aufweist, in deren Bereich die Eingangsschiene (7a) und die beiden Ausgangsschienen (7b, 7c) befestigt sind, und andererseits zwei Anschlagstrukturen (5) in der Länge der Vorrichtung angeordnet sind.

5. Vorrichtung zur Bewegungsbahnänderung nach einem der vorhergehenden Ansprüche, **dadurch gekennzeichnet, dass** mindestens eine Anschlagstruktur (5), welche ein Schienenstück für die elektrische Versorgung des Typs "dritte Schiene" (13) trägt, eine röhrenförmige Hohlstruktur darstellt.

6. Vorrichtung zur Bewegungsbahnänderung nach einem der vorhergehenden Ansprüche, **dadurch gekennzeichnet, dass** mindestens eine Anschlagstruktur (5) eine Aussparung oder Rille (8) im Bereich eines Abschnitts ihrer Oberfläche oder Seitenfläche aufweist.

7. Vorrichtung zur Bewegungsbahnänderung nach einem der vorhergehenden Ansprüche, **dadurch gekennzeichnet, dass** mindestens eine Anschlagstruktur (5) mindestens eine Öffnung (9) zeigt, die dazu angepasst ist, von einem Befestigungsmittel (10) durchdrungen zu werden, welches eine Verankerung der feststehenden Struktur (4) der Vorrichtung direkt oder indirekt im Boden erlaubt.

8. Vorrichtung zur Bewegungsbahnänderung nach einem der vorhergehenden Ansprüche, **dadurch gekennzeichnet, dass** die Anschlagstruktur (5) im Bereich mindestens eines Querschnitts eine im Wesentlichen rechteckige Form zeigt.

9. Vorrichtung zum Bewegungsbahnänderung nach einem der vorhergehenden Ansprüche, **dadurch gekennzeichnet, dass** die röhrenförmige Struktur (5) angepasst ist, um eine Verkabelung oder eine Heizeinrichtung vollständig oder teilweise aufzunehmen.

## Claims

1. Trajectory-changing device for vehicles on wheels guided by means of single rail (6) cooperating with guide mechanisms fixed to the vehicle from a front part to a rear part, and designed to be positioned between an input rail (7a) and two output rails (7b, 7c) and comprising:
- a mobile plate (1) supporting two sections of rail (2, 3) arranged to be substantially parallel to at least one portion,
- a vertical pivot mounted on a rear portion of the mobile plate (1),
- a means for actuating the pivoting of the mobile plate (1),
- at least one fixed lateral stop structure (5) of the mobile plate, arranged at the level of the mobile plate (1) and oriented along one side of the mobile plate (1) according to an axis substantially similar to the axis of at least one of the sections of rail (2, 3) of the mobile plate (1), **characterised in that** said stop structure (5) supports directly or indirectly on its upper and/or lateral part at least one section of an electric power rail in the form of a "third rail" (13).

2. Trajectory-changing device according to claim 1, **characterised in that** the lateral stop structure (5) forms an end stop of the mobile plate (1) at one or more points distributed along the whole of its length.

3. Trajectory-changing device according to any of the preceding claims, **characterised in that** the mobile plate (1) is connected to at least one stabilisation part (12) which is fixed to the mobile plate (1) and comprising at least one portion projecting from one of the sides of the mobile plate (1) and adapted to be positioned underneath the lower surface of a stop structure (5).

4. Trajectory-changing device according to any of the preceding claims, **characterised in that** the device comprises a frame structure (4) of the mobile plate (1) which has the form of a trapezium comprising, on the one hand, two elements substantially parallel to which the input rail (7a) and the two output rails (7b, 7c) are fixed and, on the other hand, two stop structures (5) arranged within the length of the device.

5. Trajectory-changing device according to any of the preceding claims, **characterised in that** at least one stop structure (5), which supports a section of the electric power rail in the form of a "third rail" (13), has a hollow tubular structure.

6. Trajectory-changing device according to any of the preceding claims, **characterised in that** at least one stop structure (5) comprises a groove (8) in a portion of its upper or lateral surface.

7. Trajectory-changing device according to any of the preceding claims, **characterised in that** at least one stop structure (5) has at least one opening (9) which is adapted to be traversed by a securing means (10) which allows the fixed structure (4) of the device to be anchored directly or indirectly to the ground.

8. Trajectory-changing device according to any of the preceding claims, **characterised in that** the stop structure (5) has in at least in one section a substantially rectangular form.

9. Trajectory-changing device according to any of the preceding claims, **characterised in that** the tubular structure (5) is adapted to accommodate all or a portion of a cabling or heating device.
